# FASCICULE DE BREVET EUROPEEN

(11) **EP 2 127 973 B1**
(45) Date de publication et mention de la délivrance du brevet: **27.02.2013**
(21) Numéro de dépôt: 09290328.5
(22) Date de dépôt: 06.05.2009
(51) Int. Cl.: B60T 7/06, B60T 11/04, A61G 7/05, G05G 1/30

(54) **Système de freinage pour lit sur roulettes**
Rollbettbremssystem
Rolling bed brake system

(30) Priorité: 06.05.2008 FR 0802499
(43) Date de publication de la demande: 02.12.2009
(73) Titulaire: Medicatlantic, 85670 St Paul Mont Penit (FR)
(72) Inventeur: Billaud, Julien, 85670 St Paul Mont Penit (FR); Rambaud, Franck, 85670 St Paul Mont Penit (FR)
(74) Mandataire: Demulsant, Xavier

(56) Documents cités:
- WO-A-03/072373
- US-A1- 2004 139 545
- US-A1- 2007 216 117
- US-B1- 6 296 261

## Description

L'invention a trait au domaine des lits, et plus particulièrement des lits médicaux tels que ceux utilisés dans les hôpitaux, les maisons de retraite ou chez des particuliers nécessitant des soins à domicile, notamment des soins médicaux.

Il peut être nécessaire de transporter une personne sur un lit, par exemple de sa chambre à une salle d'examens. C'est pourquoi la plupart des lits médicaux sont montés sur roulettes.

Lorsque le lit a atteint sa destination, les roulettes sont de préférence bloquées, notamment pour que les mouvements de la personne se trouvant dessus ne provoquent pas la mise en mouvement du lit.

Les roulettes sont par conséquent la plupart du temps associées à un système de freinage. De tels systèmes sont par exemple décrits dans les documents WO 01/14 153 et WO 2006/040234 de la société TENTE, ou encore dans le document US 2006/0131110 de CHUNG.

En général, les systèmes de freinage comprennent un frein, incluant un élément de type patin fixé à une extrémité d'une tige, à proximité de la roulette, l'autre extrémité de la tige interagissant avec une came. La came est solidaire d'un arbre, intégré dans un bord du lit et commandant au frein : lorsque l'arbre pivote, il entraine la came, la came pousse alors sur la tige et l'élément de type patin descend et entre en contact avec la roulette. Le frottement provoqué s'oppose alors à la rotation de la roulette. Lorsque la came arrête de pousser sur la tige, la tige et le patin remontent, libérant la roulette.

Une variante, décrite par exemple dans le document EP 1 621 171, consiste à produire un frottement d'éléments de type patin sur le sol afin de bloquer tout mouvement du lit.

Conventionnellement, le frein est actionné par un système, électronique ou mécanique, agissant sur la rotation de l'arbre portant la came. Dans le cas d'un freinage mécanique, ce système d'actionnement comprend typiquement un levier permettant de l'actionner, bloquant ainsi les roulettes, ou de le désactiver, libérant les roulettes. Le système d'actionnement est généralement monté sur la base du lit, de manière à être localisé sous le lit au niveau des roulettes.

De nombreux systèmes d'actionnement sont utilisés.

Par exemple, dans le document WO 00/51830, de HILL ROM, le système d'actionnement comprend plusieurs leviers placés sur chaque roulette. Un tel système nécessite d'actionner les leviers sur chaque roulette pour les bloquer ou les libérer.

On connait par ailleurs des systèmes de freinage dits centralisés, permettant de bloquer et libérer simultanément toutes les roulettes du lit. Classiquement, les roulettes, au nombre de quatre, sont reliées deux à deux sur un même arbre. L'actionnement du levier entraîne la rotation simultanée des deux arbres et donc la rotation des quatre cames des freins des quatre roues.

Dans les documents US 2002/066142 de OSBORNE ou WO 03/072373 de HILL ROM, le système d'actionnement est centralisé. Le levier se présente sous la forme d'une barre horizontale, parallèle à un bord du lit, et pivotant autour d'un axe parallèle à ce bord.

Les lits médicaux intègrent le plus souvent un système de réglage de la hauteur du sommier. En effet, pour certaines pathologies, par exemple la maladie d'Alzheimer, la hauteur du sommier doit pouvoir être la plus faible possible, c'est-à-dire à seulement quelques centimètres du sol.

Par ailleurs, les lits médicaux ne doivent pas comprendre d'éléments pouvant faire saillie par rapport aux bords : un patient qui chuterait du lit lors de son sommeil ou le personnel médical se déplaçant autour du lit ne doit pas être blessé par de tels éléments.

Or, les systèmes d'actionnement de l'art antérieur ne présentent pas une compacité suffisante pour permettre un réglage en hauteur du lit selon les besoins et comportent le plus souvent une pédale s'étendant au-delà des bords du sommier du lit pour rester accessible, ce qui va à l'encontre des besoins en sécurité des lits médicaux.

Le document US 6,296,261, de DeGoma, propose d'utiliser un système d'actionnement semblable à ceux que l'on trouve communément sur les vélos. En effet, le levier conformé en poignée est placé au niveau d'un cadre du lit, de façon à être à portée de main d'une personne déplaçant le lit. Lorsque le système de freinage doit être actionné, le levier est pressé. Cependant, lorsque le levier est relâché, le frein n'agit plus contre les roulettes et celles-ci sont de nouveau libres : ce système de freinage n'est pas adapté aux lits médicaux qui ont pour vocation d'être utilisés au moins partiellement comme lits classiques.

La présente invention vise notamment à remédier à ces problèmes.

Un premier objet de l'invention est de proposer un système de freinage compact, adapté aux lits devant atteindre un niveau de sommier au dessus du sol de quelques centimètres.

Un deuxième objet de l'invention est de proposer un système de freinage ne laissant pas d'éléments en saillie lorsque le lit est à l'arrêt de façon à ne pas blesser une personne se déplaçant autour du lit.

Un troisième objet est de proposer un système de freinage conforme au premier ou au deuxième objet mentionné ci-dessus, ce système étant centralisé et apte à provoquer un freinage simultané des roulettes.

Selon un premier aspect, l'invention propose un système d'actionnement au pied d'au moins un frein. Le système comprend une armature définissant un axe d'actionnement, un levier articulé sur l'armature, une bielle fixée sur un axe de commande, cet axe étant perpendiculaire à l'axe d'actionnement, et cet axe étant apte à commander la position d'un frein. Le système comprend en outre une barre, montée pivotante sur la bielle autour d'un axe parallèle à l'axe de commande de manière à glisser dans un plan de glissement perpendiculaire à l'axe de commande, la barre étant reliée au levier contrôlant son mouvement, ledit levier étant mobile par rapport à l'armature dans un plan perpendiculaire à l'axe d'actionnement. Le mouvement du levier dans un plan du système de freinage est donc transformé en un mouvement de rotation de la bielle dans un plan perpendiculaire.

Le levier est par ailleurs pivotant par rapport à l'armature autour d'un axe parallèle à l'axe d'actionnement entre deux positions :
- une position ouverte dans laquelle le levier s'étend dans une direction sensiblement parallèle à l'axe de commande ;
- une position fermée dans laquelle le levier forme un angle non nul avec l'axe de commande.

Ainsi, le levier en position fermée permet au système de freinage de prendre une position plus compacte, avec le levier contre l'armature, que dans la position ouverte.

Le pivotement du levier provoque le glissement de la barre par exemple grâce à une ouverture oblongue sur le levier, s'étendant de l'armature vers une extrémité du levier, un axe parallèle à l'axe d'actionnement et solidaire de la barre étant inséré dans l'ouverture du levier, ce qui permet d'obtenir simplement la mise en mouvement de la barre.

Selon une variante de réalisation, le système d'actionnement comprend une multitude de bielles. Chaque bielle est fixée sur un axe de commande d'un frein, les axes étant par ailleurs parallèles entre eux et compris dans un plan perpendiculaire à l'axe d'actionnement, et ia barre étant montée pivotante sur chaque bielle, le mouvement du seul levier faisant ainsi pivoter toutes les bielles.

Selon une autre variante de réalisation, le levier comprend un élément d'appui légèrement incliné par rapport au levier, ce qui permet au levier d'être mis en mouvement par toute force ayant une composante parallèle au plan dans lequel le levier se déplace, cette force appuyant sur l'élément d'appui.

Selon un deuxième aspect, l'invention propose un système de freinage, comprenant un système de freinage tel que décrit ci-dessus, et une roulette associée à un frein. La roulette est positionnée de façon à être parallèle au plan du levier. Le frein est articulé sur l'axe de commande entre deux positions assujetties au système d'actionnement :
- une position de libération dans laquelle le frein laisse le mouvement de la roulette libre ;
- une position de freinage dans laquelle le frein s'oppose au mouvement de la roulette.

Selon un premier mode de réalisation préféré, le levier du système de freinage est mobile entre deux positions :
- une position ouverte dans laquelle le levier s'étend dans une direction sensiblement parallèle à l'axe de commande et dans laquelle le frein est en position de libération ;
- une position fermée dans laquelle le levier forme un angle aigu avec l'axe de commande et dans laquelle le frein est en position de freinage.

Selon un deuxième mode de réalisation préféré, levier du système de freinage est mobile entre deux positions :
une position ouverte dans laquelle le levier s'étend dans une direction sensiblement parallèle à l'axe de commande et dans
laquelle le frein est en position de freinage ;
une position fermée dans laquelle le levier forme un angle non
nul avec l'axe de commande et dans laquelle le frein est en
position de libération.

Cela permet de monter le système sur un lit de deux manières :
soit sur des longerons, selon le premier mode de réalisation préféré soit
sur des traverses, selon le deuxième mode de réalisation préféré, sans
que le système n'ai à être modifié.

Le frein comprend par exemple une tige reliée à l'axe de commande, une extrémité de la tige étant munie d'un patin, ledit patin, lorsque le système est en position de blocage, étant en contact avec la roulette.

Le frein peut aussi comprendre une tige reliée à l'axe de commande, une extrémité de la tige étant munie d'un patin, ledit patin, lorsque le système est en position de blocage, étant en contact avec le sol.

Dans les deux exemples, l'axe de commande peut notamment être solidaire d'une came, ladite came, lorsque le système est en position de blocage, appuyant sur la tige. Ainsi, la rotation de l'axe de commande est convertie en un mouvement de translation de la tige. Le système de freinage ainsi formé est peu coûteux, efficace et largement disponible dans le commerce.

Selon un mode de réalisation, le système de freinage comprend une multitude de roulettes associées à un frein, chaque frein étant relié à un axe de commande, les axes de commande étant actionné par un seul levier dans le cadre d'un système de freinage centralisé.

Selon un troisième aspect, l'invention propose un lit comprenant une base de forme sensiblement rectangulaire, définie par des bords, et un système de freinage tel que décrit ci-dessus, dans lequel l'armature du système d'actionnement est montée solidaire sur la base du lit, permettant au lit d'être utilisé pour transporter une personne ou d'être utilisé à l'arrêt comme un lit classique.

Selon un premier mode de réalisation préféré, la barre du système d'actionnement est montée parallèlement à un bord du lit, le levier effectuant donc un mouvement dans un plan parallèle au lit.

Selon un deuxième mode de réalisation préféré, les axes de commande sont intégrés dans la base du lit, augmentant la compacité du système.

Selon un troisième mode de réalisation préféré, le levier est situé sous la base du lit, ce qui permet au levier de ne pas gêner un quelconque mécanisme au-dessus de la base.

Selon un quatrième mode de réalisation préféré, la hauteur du lit par rapport au sol est réglable, et peut atteindre un niveau égal à celui des roulettes sans gêner le système d'actionnement.

La hauteur peut être réglable au moyen d'un système à croisillons montés entre la base et le sommier du lit ou au moyen d'un système à colonnes monté dans la tête et le pied de lit.

D'autres objets et avantages de l'invention apparaîtront à la lumière de la description faite ci-après de modes de réalisation actuellement préférés en référence aux dessins annexés dans lesquels :
- la figure 1 est une vue de profil d'un lit sur roulettes équipé du système de freinage, monté sur la base du lit entre deux roues, ce système étant représenté dans une position de libération ;
- la figure 2 est une vue de détail de la figure 1, montrant la position du levier par rapport au lit ;
- la figure 3 est une vue en perspective du système de freinage de la figure 1, monté sur la base du lit montrée partiellement ;
- la figure 4 est une vue de dessous du système de freinage de la figure 3, sur laquelle seule une barre transversale de la base est représentée ;
- la figure 5 est une vue de profil du système de freinage de la figure 4 ;
- la figure 6 est une vue de dessus de la figure 5 ;
- la figure 7 est une vue en coupe de la figure 5 selon la ligne VII - VII de la figure 5 ;
- la figure 8 est une vue de profil de la base du lit équipé du système de freinage de la figure 1, détaillant la centralisation du freinage ;
- la figure 9 est une vue de détail de la figure 8 ;
- la figure 10 est une vue de face du lit et du système de freinage de la figure 1 ;
- la figure 11 est une vue de profil d'un lit sur roulettes équipé du système de freinage dans une position de blocage, monté sur la base du lit entre deux roues ;
- la figure 12 est une vue de détail de la figure 11, montrant la position du levier par rapport au lit ;
- la figure 13 est une vue en perspective du système de freinage de la figure 11, monté sur la base du lit ;
- la figure 14 est une vue de dessous du système de freinage de la figure 13, sur laquelle seule une barre transversale de la base est représentée ;
- la figure 15 est une vue de profil du système de freinage de la figure 14 ;
- la figure 16 est une vue de dessus de la figure 15 ;
- la figure 17 est une vue en coupe de la figure 15 selon la ligne XVII - XVII de la figure 15 ;
- la figure 18 est une vue de profil de la base du lit équipé du système de freinage de la figure 11, détaillant la centralisation du freinage ;
- la figure 19 est une vue de détail de la figure 8 ;
- la figure 20 est une vue de face du lit et du système de freinage de la figure 1.

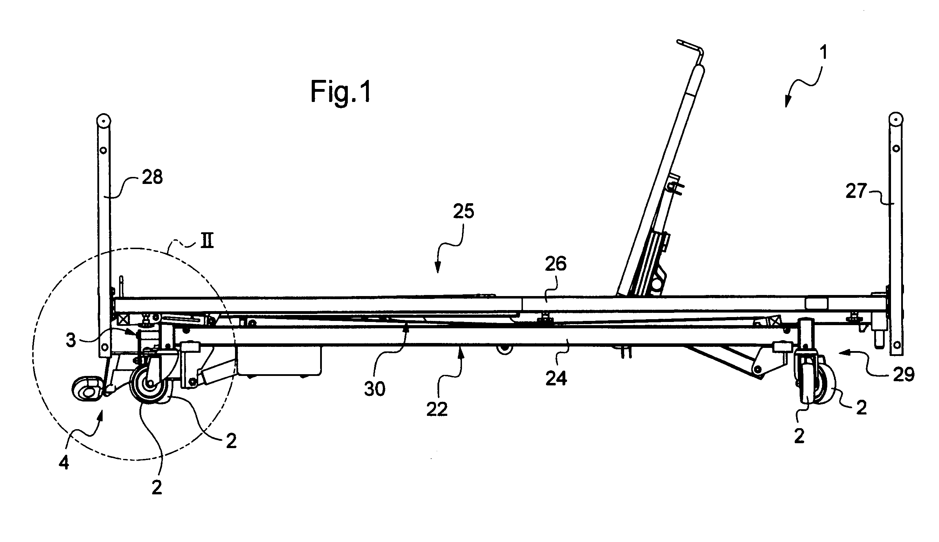

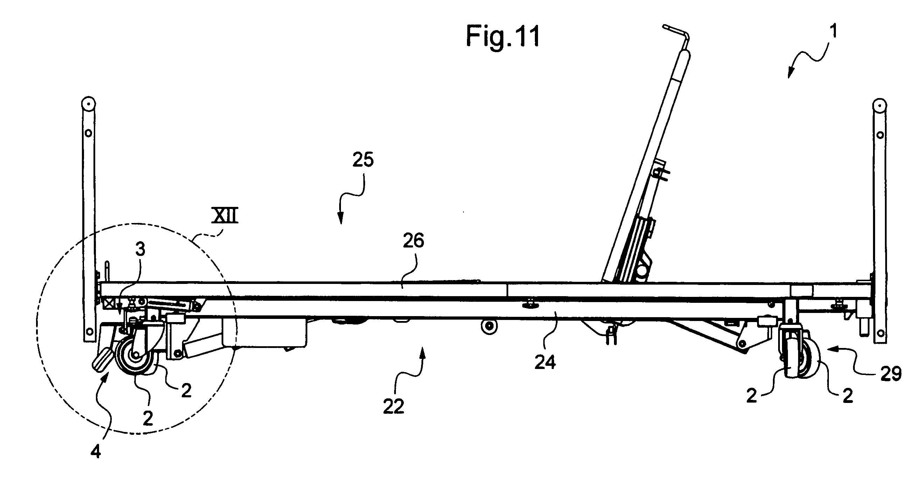

Sur les figures 1 et 11 est représenté un lit 1 médical sur roulettes 2, sur lequel est monté un système 3 de freinage, lui-même comprenant un système 4 d'actionnement.

Le système 4 d'actionnement comprend une armature 5 en forme de chape s'étendant le long d'un axe 6 d'actionnement. L'armature 5 définit également un axe 7 guide perpendiculaire à l'axe 6 d'actionnement. Le système 4 comprend de plus au moins une bielle 8, pivotante autour d'un axe 9 de commande, cet axe 9 formant un trièdre droit avec l'axe 7 guide et l'axe 6 d'actionnement.

A partir de ce trièdre, on définit deux surfaces sur l'armature : une surface guide 10 perpendiculaire à l'axe 9 de commande et une surface 11 d'arrêt perpendiculaire à l'axe 7 guide.

Le système 4 d'actionnement comporte en outre un levier 12, comprenant deux sections. Une première section 13 s'étend dans un plan perpendiculaire à l'axe 6 d'actionnement, et est montée pivotante sur l'armature 5 autour de l'axe 6 d'actionnement dans une région extrême 14. Une deuxième section 15 du levier 12 s'étend à partir de l'extrémité 16 opposée à la région extrême 14, de manière sensiblement perpendiculaire à la première section 13 et parallèlement à l'axe d'actionnement 6. La deuxième section 15 comporte un élément 17 d'appui, présentant une surface légérement inclinée par rapport au plan perpendiculaire à l'axe 6 d'actionnement.

Une barre 18 s'étendant parallèlement à l'axe 7 guide est montée entre le levier 12 et la bielle 8. D'une part, la barre 18 est montée pivotante sur la bielle 8, autour d'un axe parallèle à l'axe 9 de commande. D'autre part, elle est articulée sur le levier 12 au moyen d'une goupille 19 saillante, solidaire de la barre 18, en contact avec la surface 10 guide et insérée dans une ouverture 20 oblongue du levier 12. Cette ouverture 20 est placée sur la première section 13, et s'étend entre ses deux extrémités, dans le sens du levier 12.

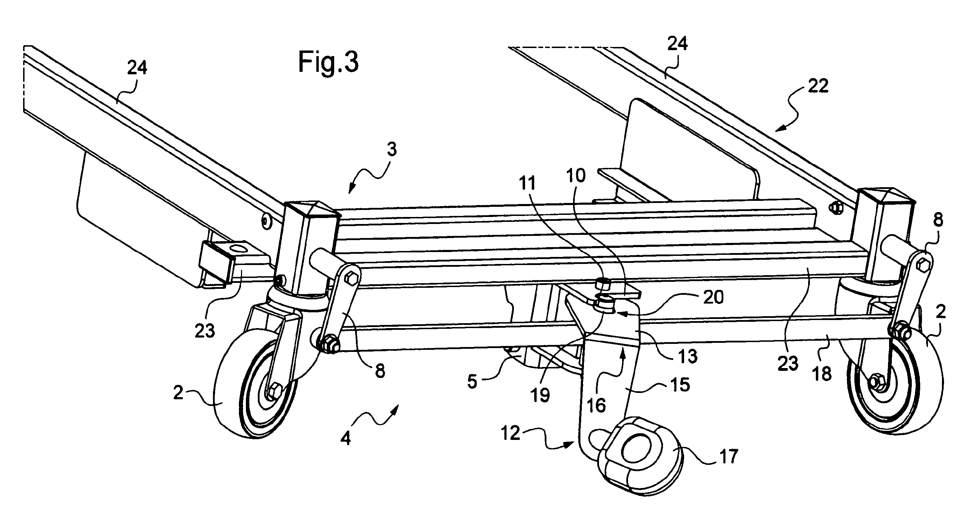

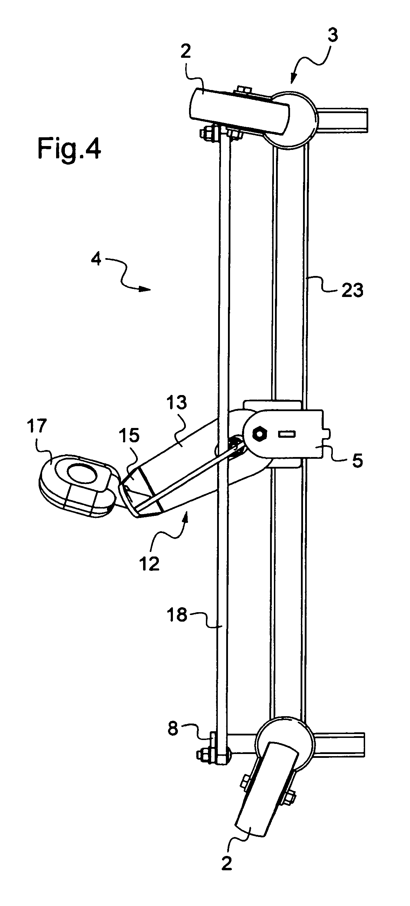

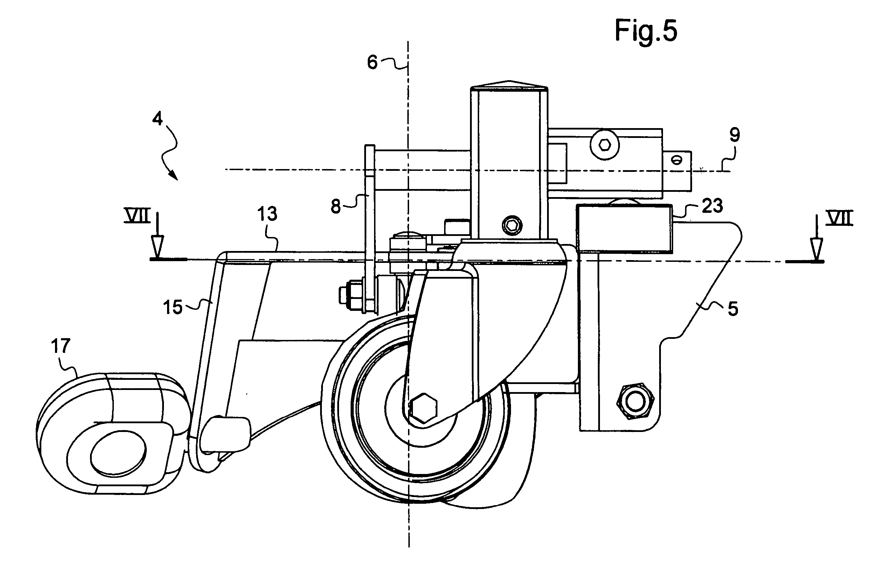

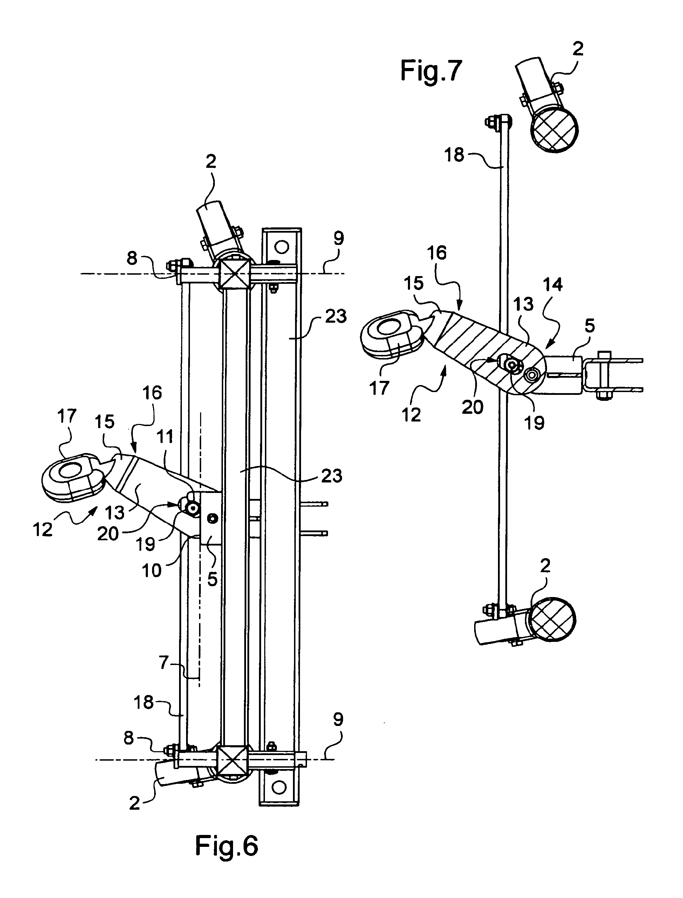

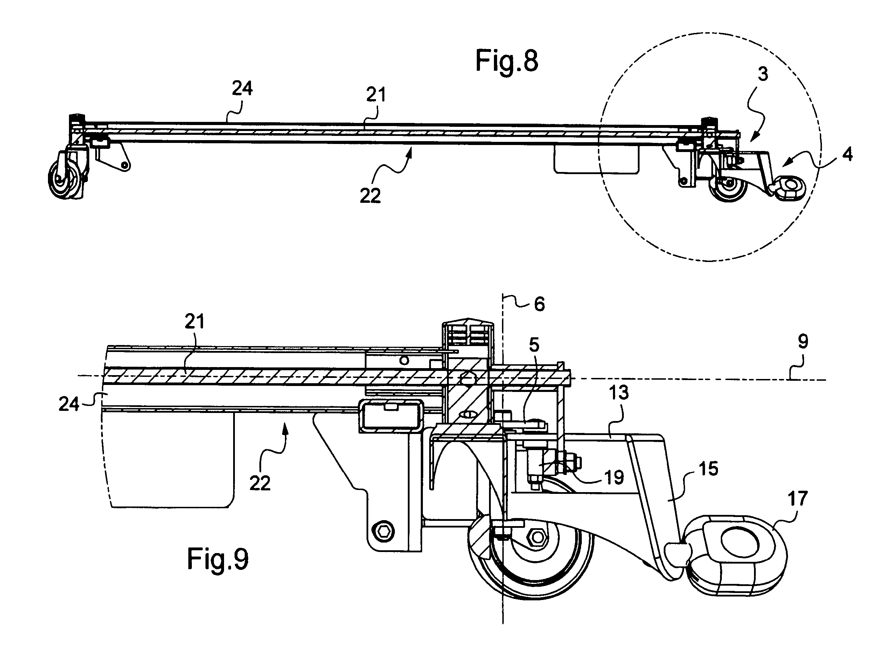

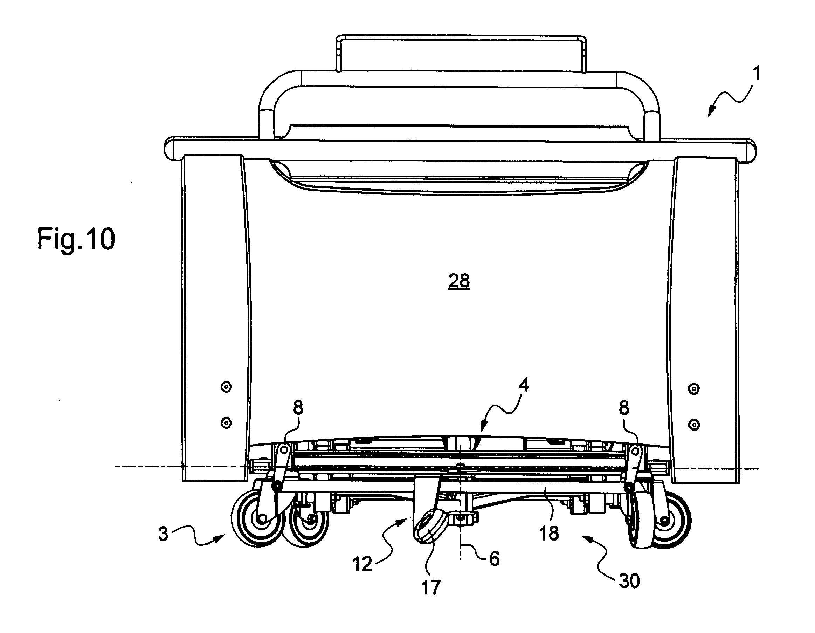

Dans une position ouverte, illustrée sur les figures 1 à 10, le levier 12 s'étend dans une direction sensiblement parallèle à l'axe 9 de commande. La goupille 19 de la barre 18 se trouve alors en butée contre la surface 11 d'arrêt de l'armature.

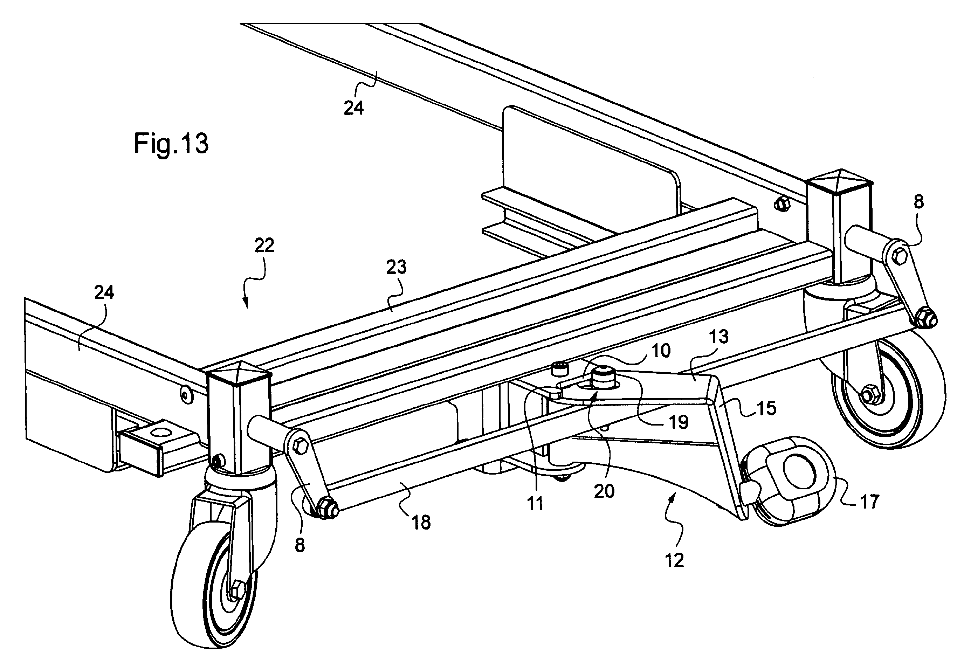

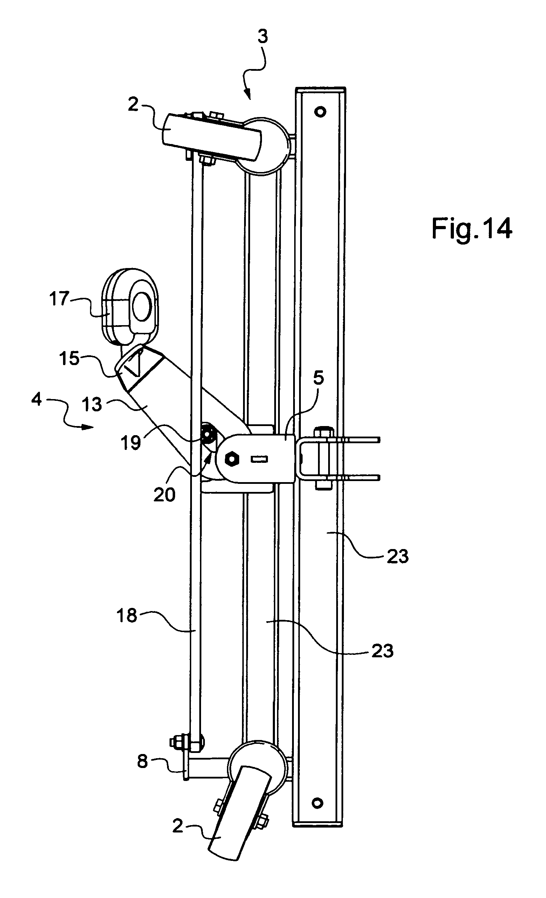

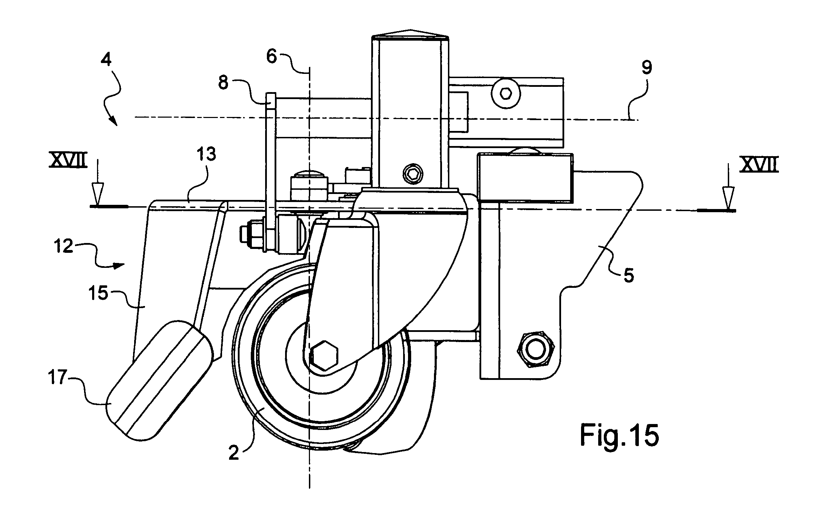

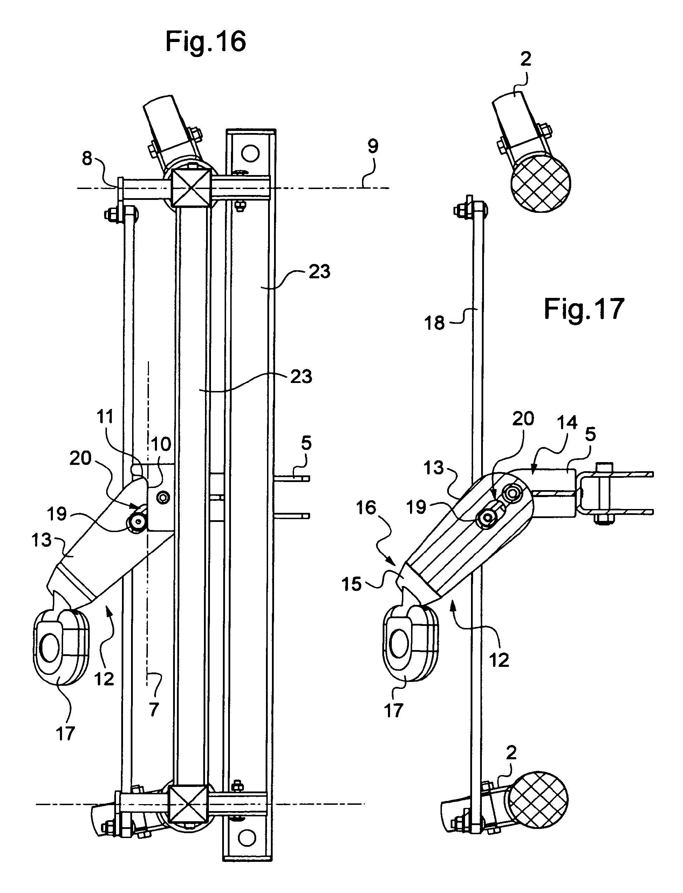

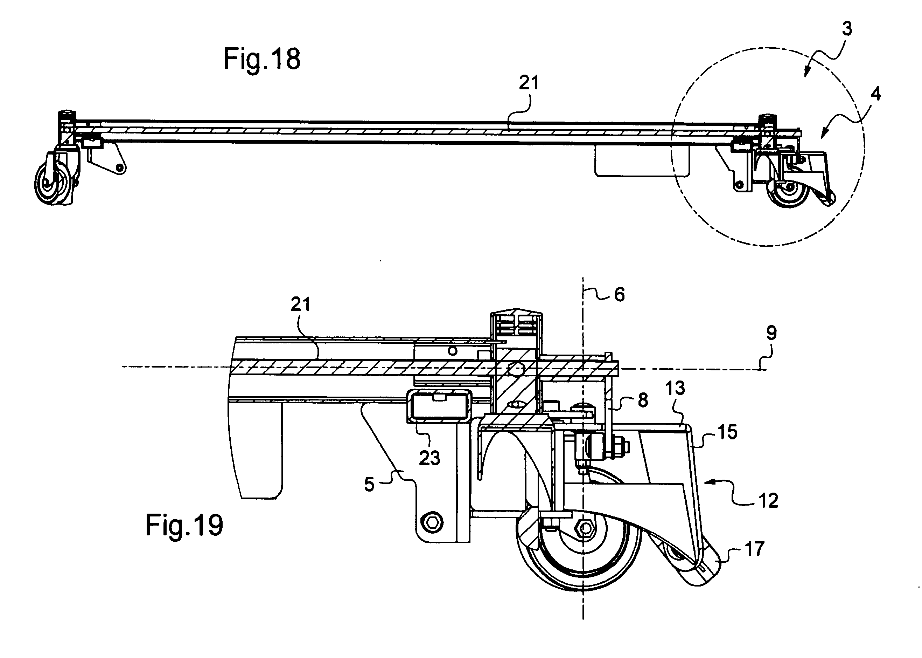

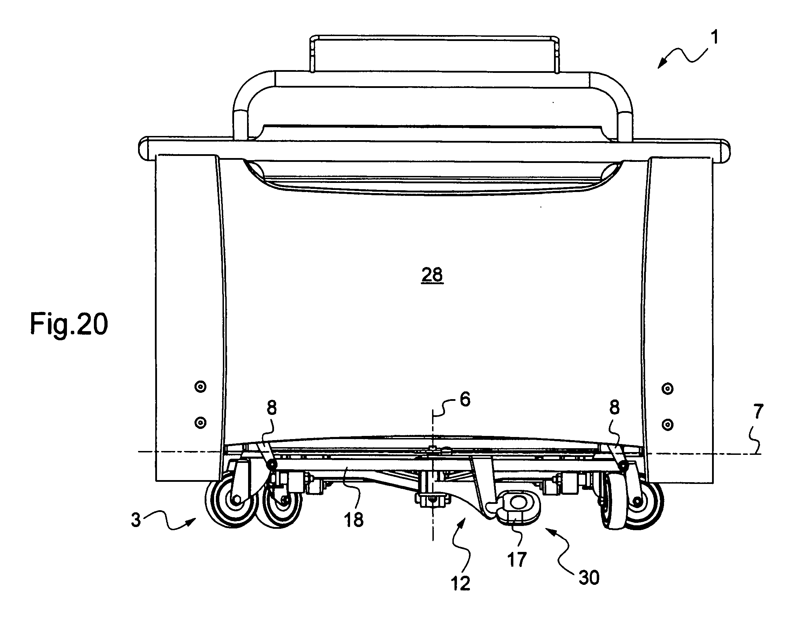

Dans une position fermée, illustrée sur les figures 11 à 20, le levier 12 s'étend dans une direction formant un angle avec l'axe 9 de commande, et la goupille 19 est éloignée de la surface 11 d'arrêt.

Le levier 12 passe de la position ouverte à la position fermée par poussée sur l'élément 17 d'appui, provoquant le pivotement autour de l'axe 6 d'actionnement. Le levier 12 s'éloigne de l'alignement avec l'axe 9 de commande en décrivant une trajectoire comprise dans un plan perpendiculaire à l'axe 6 d'actionnement. La goupille 19 est entrainée en glissement dans l'ouverture 20 oblongue et contre la surface 10 guide de l'armature 5, entrainant la barre 18 en glissement contre la surface 10 guide de l'armature 5. La bielle 8 convertit le mouvement de la barre 18 en un mouvement de rotation autour de l'axe 9 de commande.

Le passage de la position fermée à la position ouverte se fait selon les opérations inverses.

Le système 4 d'actionnement est intégré dans le système 3 de freinage de roulettes 2. Le système de freinage 3 comprend un frein, intégrant par exemple un élément de type patin fixé à l'extrémité d'une tige. L'autre extrémité de la tige est en interaction avec une came, elle-même solidaire en rotation d'un arbre 21. Lorsque l'arbre 21 pivote, il entraine la came, provoquant le mouvement de la tige et de l'élément de type patin qui peut alors entrer en contact avec une roulette pour la freiner.

Dans une première position, dite de libération, le frein n'exerce aucune action sur les roulettes 2, les laissant libres en rotation.

Dans une deuxième position du frein, dite de freinage, le frein exerce une force s'opposant à la rotation des roulettes 2.

Selon un premier mode de réalisation, le système 4 d'actionnement comprend une unique bielle 8, solidaire de l'arbre. Lorsque le levier 12 est actionné et que la bielle 8 pivote, l'arbre 21 est également entrainé en rotation et agit sur la position du frein.

Selon un deuxième mode de réalisation, le système 4 d'actionnement comprend plusieurs bielles 8, montées pivotantes sur la barre 18 autour d'axes parallèles et coplanaires. Sur chaque bielle 8 est fixé de manière solidaire un arbre 21, commandant un frein. Ainsi, le passage du levier 12 d'une position à une autre entraine simultanément en rotation les bielles 8 et les arbres 21 autour de leur axe 9 de commande, agissant sur la position des freins.

Dans les deux modes de réalisation, chaque arbre 21 peut commander un ou plusieurs freins.

Selon un premier mode de réalisation préféré, lorsque le levier 12 est en position ouverte, le frein est en position de libération, et lorsque le levier 12 est en position fermée, le frein est en position de freinage.

Selon un deuxième mode de réalisation préféré, lorsque le levier 12 est en position ouverte, le frein est en position de freinage, et lorsque le levier 12 est en position fermée, le frein est en position de libération.

Les roulettes 2 sont par exemple multidirectionnelles, c'est-à-dire pivotantes autour de l'axe de la tige du frein, de façon à faciliter le déplacement du lit. Dans ce cas, le système 3 de freinage inclut avantageusement un mécanisme de blocage directionnel, maintenant la roulette 2 dans une direction déterminée, le mécanisme de blocage étant également assujetti au système 4 d'actionnement. A cet effet, la tige du frein est munie par exemple d'une corolle dentée comportant des encoches. Un élément de blocage s'étendant parallèlement à l'axe de rotation de la roulette est fixé sur la roulette. Ainsi, lorsque la came appuie sur la tige freinant la roulette, l'élément de blocage est inséré dans une encoche de la corolle, bloquant la rotation de la roulette 2 autour de l'axe de la tige.

Il est également possible de découpler le blocage directionnel du freinage, par exemple en fixant la corolle sur une deuxième tige parallèle à la première Cette deuxième tige est actionnée de la même manière que la première, une deuxième came sur l'arbre 21 pilotant son mouvement. La deuxième came permet par exemple de bloquer directionnellement la roulette 2 en faisant pivoter l'arbre 21 dans un sens opposé à celui permettant le freinage ou en le faisant pivoter d'un angle différent.

Les rotations de l'arbre 21 étant commandées par le mouvement du levier 12, le blocage directionnel est provoqué par exemple en faisant pivoter le levier 12 dans un sens opposé à celui pour obtenir le freinage des roulettes 2, plaçant le levier 12 dans une position différente de la position fermée ou de la position ouverte.

Le système 4 de freinage est fixé sur le lit 1, par exemple un lit médical.

Le lit 1 comprend une base 22, de forme généralement rectangulaire, incluant deux traverses 23 reliant deux longerons 24 formant les bords du lit 1, des roulettes 2 étant fixées aux quatre coins, sur une face de la base 22. Il comprend de plus un sommier 25, comprenant un cadre 26, de forme également rectangulaire, fixé sur la face opposée aux roulettes de la base 22. A l'intérieur du cadre 26, des éléments de support d'un matelas sont placés, comme par exemple des lattes, des ressorts, des plaques ou encore des mailles. Les dimensions du cadre 26 sont supérieures à celles de la base 22, de façon à ce qu'il recouvre totalement la base 22 et s'étende au-delà de ses bords. D'autre part, le lit 1 peut comporter une tête 27 et un pied 28 de lit, par exemple fixés de part et d'autre du sommier 25, au dessus des traverses 23.

Dans ce qui suit, horizontal désigne toute direction comprise dans le plan définit par le lit 1, et vertical désigne toute direction perpendiculaire au plan du lit 1.

Le système 3 de freinage incluant le système d'actionnement est fixé sur le lit 1 de la manière suivante.

L'armature 5 est fixée solidairement sur la base 22 du lit 1, la barre se trouvant parallèle à un bord du lit.

Selon le premier mode de réalisation préféré, l'armature 5 est fixée sur au moins une traverse 23, l'axe 6 d'actionnement se trouvant vertical, et l'axe 9 de commande se trouvant parallèle à un longeron 24. Sur les figures, l'armature 5 est fixée sur deux traverses 23 du lit 1. Le levier 12 est relié à la barre 18 dans une région médiane de la barre 18.

Selon le deuxième mode de réalisation préféré, l'armature 5 est fixée sur au moins un longeron 24, l'axe 6 d'actionnement se trouvant toujours vertical, et l'axe 9 de commande se trouvant parallèle à une traverse 23. Le levier 12 est relié à la barre 18 dans une région extrême de la barre 18.

La barre 8 est localisée sous le sommier 25 et elle est dimensionnée de façon à ce que son mouvement de glissement, dans un plan vertical par rapport au lit 1, ne la fasse pas sortir du cadre 26 du sommier 25. La première section 13 du levier 12 s'étend dans le plan horizontal, tandis que la deuxième section 15 est dirigée verticalement vers les roulettes 2.

Selon un mode de réalisation, deux arbres 21 commandent chacun les freins de deux roulettes 2 du lit 1 et sont solidaires chacun d'une bielle 8 du système 4 d'actionnement. Les deux arbres 21 sont par exemple intégrés, selon le premier mode de réalisation préféré, dans les deux longerons 24 du lit 1, ou, selon le deuxième mode de réalisation préféré, dans les traverses 23.

Ainsi, lorsque le levier 12 est actionné, il provoque le changement simultané de position des freins sur les quatre roues 2, réalisant un freinage dit centralisé.

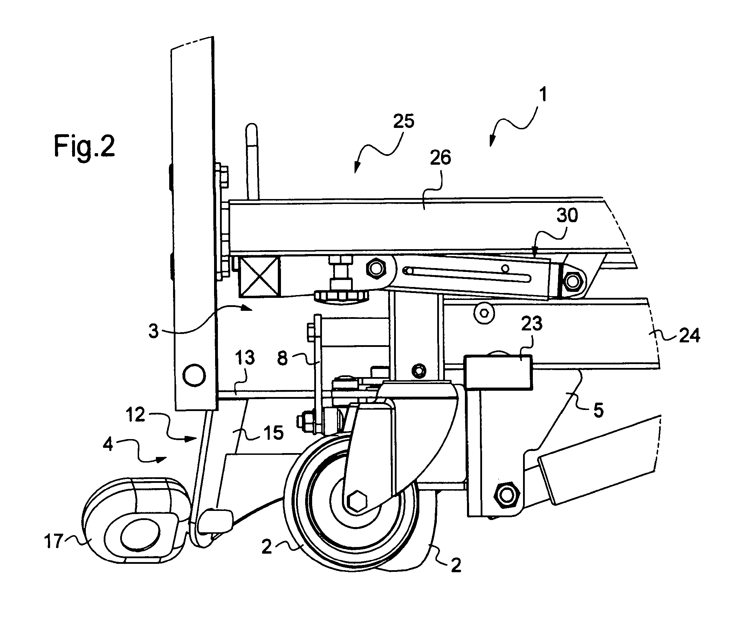

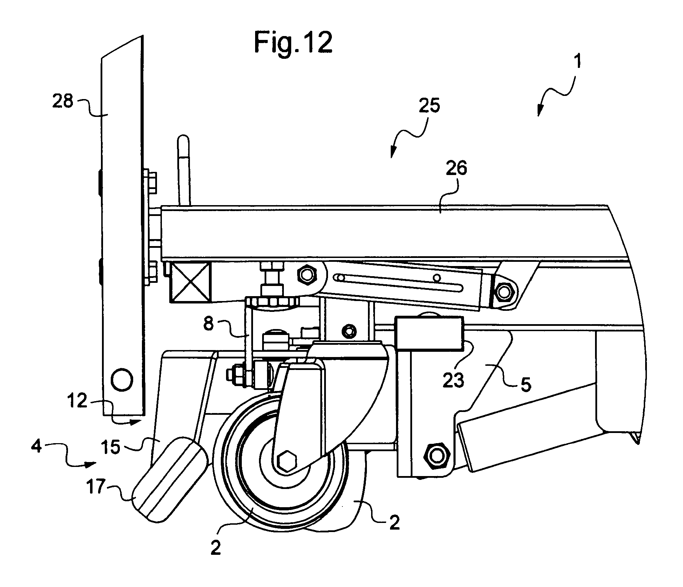

Selon les modes de réalisation préférés, lorsque le frein est en position de libération, l'élément 17 d'appui du levier 12 est légèrement saillant par rapport à la tête 27 ou au pied 28 de lit (figures 1 et 2) ou par rapport à un plan vertical passant par un bord du cadre 26 du sommier 25. Le lit 1 peut alors est déplacé sur les roulettes 2. L'élément 17 d'appui est accessible au pied pour pouvoir être poussé et faire pivoter le levier 12 dans sa position fermée, provoquant le freinage des roulettes 2. Dans cette position, l'élément 17 d'appui est rentré sous le sommier 25, et n'est de ce fait plus saillant (figures 11 et 12). En effet, le levier est alors en position escamotée par rapport à un plan vertical perpendiculaire à la tête 27 ou au pied 28 de lit. Une personne se trouvant sur le lit 1 à l'arrêt et chutant, ou une personne se déplaçant autour du lit, ne se blessera donc pas sur le levier 12, ni sur aucun élément du système 4 d'actionnement. L'élément d'appui 17 reste toutefois accessible au pied sous le sommier, de façon à être tiré et à faire basculer le levier de nouveau dans sa position ouverte.

Le passage du levier 12 en une position escamotée est réalisé avantageusement par le pivotement du levier 12 sur l'armature 5. D'autres moyens pour obtenir la position escamotée du levier 12 peuvent être mis en oeuvre.

De plus, quelle que soit la position du levier 12, il reste dans un même plan horizontal, soit à une hauteur constante par rapport au sommier 25. Ainsi, lorsque l'armature 5 du système 4 d'actionnement est fixée sous la base 22 du lit 1, et que le levier 12 est dirigé de telle sorte que l'élément 17 d'appui est aussi sous la base 22, dans l'espace 29 occupé par les roulettes 2, le sommier 25 peut venir directement en contact contre la base 22 sans gêner le mouvement du levier 12. De plus, quelque soit la position du levier, il reste toujours accessible au pied dans l'espace entre le sol et la base, car son mouvement de glissement horizontal se fait dans l'espace 29 occupé par les roulettes, comme cela est illustré sur les figures 1 et 11.

Par conséquent, le système 4 d'actionnement n'impose pas de distance minimale à respecter entre la base 22 et le sommier 25, et permet au sommier 25 d'atteindre un niveau minimal sensiblement égal à celui de la base 22, dépendant principalement de la hauteur des roulettes 2.

Dans le cas d'un lit 1 réglable en hauteur, dans lequel un mécanisme 30 de réglage de la hauteur est placé entre la base 22 et le sommier 25, le système d'actionnement tel que décrit assure de ne pas gêner ce mécanisme 30, qui peut donc occuper tout l'espace entre la base et le sommier.

Par exemple, le lit peut être réglable par un système à croisillons, montés entre la base 22 et le sommier 25 et actionnés par un système électrique. Lorsque le sommier 25 est à une hauteur minimale par rapport à la base 22 (figures 11 et 12), les croisillons sont complètement aplatis contre la base, permettant au sommier d'être au plus près de la base (figures 11 et 12).

Le lit 1 peut également être réglable par un système à colonnes intégrées dans la tête 27 et le pied 28 de lit ou sur la base 22. Un tel système permet soit de régler la hauteur du sommier 25 par rapport à la base 22, soit la hauteur de la base par rapport au sol, la hauteur minimale du sommier 25 étant celle de la base 22.

Le système 4 d'actionnement ainsi monté sur le lit 1 médical, lorsque le levier 12 est en position fermée, offre un système compact, répondant aux exigences de sécurité de tels lits en restant localisé sous le lit à l'arrêt.

De plus, l'invention est adaptable à un freinage centralisé de la majorité des roulettes.

Enfin, le mouvement horizontal du levier 12 du système 4 d'actionnement permet d'obtenir un lit 1 dont la hauteur minimale n'est pas limitée par le mouvement du levier 12, et de répondre par conséquent à des exigences strictes de minimum de hauteur.

## Revendications

1. Système (**4**) d'actionnement au pied d'au moins un frein, le système (**4**) comprenant une armature (**5**) définissant un axe (**6**) d'actionnement, un levier (**12**) articulé sur l'armature (**5**), une bielle (**8**) fixée sur un axe (**9**) de commande, cet axe (**9**) étant perpendiculaire à l'axe (**6**) d'actionnement, et cet axe (**9**) étant apte à commander la position d'un frein, le système (**4**) étant **caractérisé en ce qu'**il comprend une barre (**18**), montée pivotante sur la bielle (**8**) autour d'un axe parallèle à l'axe (**9**) de commande de manière à glisser dans un plan de glissement perpendiculaire à l'axe (**9**) de commande, la barre (**18**) étant reliée au levier (**12**) contrôlant son mouvement, ledit levier (**12**) étant mobile par rapport à l'armature (**5**) dans un plan perpendiculaire à l'axe (**6**) d'actionnement.

2. Système (**4**) d'actionnement selon la revendication 1, dans lequel le levier (**12**) est pivotant par rapport à l'armature (**5**) autour de l'axe (**6**) d'actionnement entre deux positions :
une position ouverte dans laquelle le levier (**12**) s'étend dans une direction sensiblement parallèle à l'axe (**9**) de commande ;
une position fermée dans laquelle le levier (**12**) forme un angle non nul avec l'axe (**9**) de commande.

3. Système (**4**) d'actionnement selon la revendication 2, dans lequel la barre (**18**) est solidaire d'un axe parallèle à l'axe (**6**) d'actionnement, et dans lequel le levier (**12**) comprend une ouverture (**20**) oblongue s'étendant de l'armature (**5**) vers une extrémité du levier (**12**), l'axe de la barre (**18**) étant inséré dans l'ouverture (**20**) du levier (**12**) de manière à ce que le pivotement du levier (**12**) provoque le glissement de la barre (**18**).

4. Système (**4**) d'actionnement selon l'une des revendications 1 à 3, comprenant une multitude de bielles (**8**), chacune fixée sur un axe (**9**) de commande d'un frein, les axes (**9**) étant parallèles entre eux et compris dans un plan perpendiculaire à l'axe (**6**) d'actionnement, la barre (**18**) étant montée pivotante sur chaque bielle (**8**).

5. Système (**4**) d'actionnement selon l'une des revendications 1 à 4, dans lequel le levier (**12**) comprend un élément (**17**) d'appui légèrement incliné par rapport au levier (**12**).

6. Système (**3**) de freinage de roulettes, comprenant un système (**4**) d'actionnement selon l'une des revendications 1 à 5, et une roulette (**2**) associée à un frein, l'axe de rotation de la roulette (**2**) étant parallèle au plan du levier (**12**), ledit frein étant articulé sur l'axe (**9**) de commande entre deux positions assujetties au système (**4**) d'actionnement :
une position de libération dans laquelle le frein laisse le mouvement de la roulette (**2**) libre ;
une position de freinage dans laquelle le frein s'oppose au mouvement de la roulette (**2**).

7. Système (**3**) de freinage selon la revendication 6, dans lequel le levier (**12**) est mobile entre deux positions :
une position ouverte dans laquelle le levier (**12**) s'étend dans une direction sensiblement parallèle à l'axe (**9**) de commande et dans laquelle le frein est en position de libération ;
une position fermée dans laquelle le levier (**12**) forme un angle non nul avec l'axe (**9**) de commande et dans laquelle le frein est en position de freinage.

8. Système (**3**) de freinage selon la revendication 6, dans lequel le levier (**12**) est mobile entre deux positions :
une position ouverte dans laquelle le levier (**12**) s'étend dans une direction sensiblement parallèle à l'axe (9) de commande et dans laquelle le frein est en position de freinage ;
une position fermée dans laquelle le levier (**12**) forme un angle non nul avec l'axe (**9**) de commande et dans laquelle le frein est en position de libération.

9. Système (**3**) de freinage selon l'une des revendications 6 à 8, dans lequel le frein comprend une tige reliée à l'axe (**9**) de commande, une extrémité de la tige étant munie d'un patin, ledit patin, lorsque le système est en position de blocage, étant en contact avec la roulette (**2**).

10. Système (**3**) de freinage selon l'une des revendications 6 à 8, dans lequel le frein comprend une tige reliée à l'axe de commande, une extrémité de la tige étant munie d'un patin, ledit patin, lorsque le système est en position de blocage, étant en contact avec le sol.

11. Système (**3**) de freinage selon la revendication 9 ou 10, dans lequel l'axe (**9**) de commande est solidaire d'une came, ladite came, lorsque le levier (**12**) est en position fermée, appuyant sur la tige.

12. Système de freinage selon l'une des revendications 6 à 11, comprenant une roulette (**2**) multidirectionnelle.

13. Système de freinage selon la revendication 12, comprenant un système de blocage directionnel de la roulette (**2**) multidirectionnelle.

14. Système (**3**) de freinage selon l'une des revendications 6 à 13, comprenant une multitude de roulettes (**2**) associée à un frein, chaque frein étant relié à un axe (**9**) de commande.

15. Lit (**1**) comprenant une base (**22**) de forme sensiblement rectangulaire, définie par des bords, et un système (**3**) de freinage selon l'une des revendications 6 à 14, dans lequel l'armature (**5**) du système (**4**) d'actionnement est montée solidaire sur la base (**22**) du lit (**1**).

16. Lit (**1**) selon la revendication 15, dans lequel la barre (**18**) du système (**4**) d'actionnement est parallèle à un bord du lit (**1**).

17. Lit (**1**) selon la revendication 15 ou 16, dans lequel les axes (**9**) de commande sont intégrés dans la base (**22**) du lit (**1**).

18. Lit (**1**) selon l'une des revendications 15 à 17, dans lequel le levier (**12**) est situé sous la base (**22**).

19. Lit (**1**) selon l'une des revendications 15 à 18, dans lequel la hauteur du lit (**1**) par rapport au sol est réglable.

20. Lit (**1**) selon la revendication 19, comprenant un sommier (**25**) et un système à croisillons monté entre la base (**22**) et le sommier (**25**).

21. Lit (**1**) selon la revendication 19, comprenant une tête (**27**), un pied (**28**) de lit et un système à colonnes monté dans la tête (**27**) et le pied (**28**) de lit.

## Claims

1. System (**4**) for actuating by the foot at least one brake, the system (**4**) comprising a reinforcement (**5**) defining an actuation axis (**6**), a lever (**12**) articulated on the reinforcement (**5**), a link rod (**8**) fixed to a control axis (**9**), this axis (**9**) being at right angles to the actuation axis (**6**), and this axis (**9**) being suitable for controlling the position of a brake, the system (**4**) being **characterized in that** it comprises a bar (**18**) mounted to pivot on the link rod (**8**) about an axis parallel to the control axis (**9**) so as to slide in a sliding plane at right angles to the control axis (**9**), the bar (**18**) being linked to the lever (**12**) controlling its movement, said lever (**12**) being mobile relative to the reinforcement (**5**) in a plane at right angles to the actuation axis (**6**).

2. Actuation system (**4**) according to Claim 1, in which the lever (**12**) pivots relative to the reinforcement (**5**) about the actuation axis (**6**) between two positions:
an open position in which the lever (**12**) extends in a direction substantially parallel to the control axis (**9**);
a closed position in which the lever (**12**) forms a non-zero angle with the control axis (**9**).

3. Actuation system (**4**) according to Claim 2, in which the bar (**18**) is attached to an axis parallel to the actuation axis (**6**), and in which the lever (**12**) comprises an oblong opening (**20**) extending from the reinforcement (**5**) to an end of the lever (**12**), the axis of the bar (**18**) being inserted into the opening (**20**) of the lever (**12**) so that the pivoting of the lever (**12**) provokes the sliding of the bar (**18**).

4. Actuation system (**4**) according to one of Claims 1 to 3, comprising a multitude of link rods (**8**), each fixed to a control axis (**9**) of a brake, the axes (**9**) being parallel to one another and contained in a plane at right angles to the actuation axis (**6**), the bar (**18**) being mounted to pivot on each link rod (**8**).

5. Actuation system (**4**) according to one of Claims 1 to 4, in which the lever (**12**) comprises an element (**17**) on which to press which is slightly inclined relative to the lever (**12**).

6. Castor braking system (**3**), comprising an actuation system (**4**) according to one of Claims 1 to 5, and a castor (**2**) associated with a brake, the rotation axis of the castor (**2**) being parallel to the plane of the lever (**12**), said brake being articulated on the control axis (**9**) between two positions controlled by the actuation system (**4**):
a release position in which the brake allows free movement of the castor (**2**);
a braking position in which the brake opposes the movement of the castor (**2**).

7. Braking system (**3**) according to Claim 6, in which the lever (**12**) is mobile between two positions:
an open position in which the lever (**12**) extends in a direction substantially parallel to the control axis (**9**) and in which the brake is in the release position;
a closed position in which the lever (**12**) forms a non-zero angle with the control axis (**9**) and in which the brake is in the braking position.

8. Braking system (**3**) according to Claim 6, in which the lever (**12**) is mobile between two positions:
an open position in which the lever (**12**) extends in a direction substantially parallel to the control axis (**9**) and in which the brake is in the braking position;
a closed position in which the lever (**12**) forms a non-zero angle with the control axis (**9**) and in which the brake is in the release position.

9. Braking system (**3**) according to one of Claims 6 to 8, in which the brake comprises a rod linked to the control axis (**9**), one end of the rod being provided with a block, said block, when the system is in the blocking position, being in contact with the castor (**2**).

10. Braking system (**3**) according to one of Claims 6 to 8, in which the brake comprises a rod linked to the control axis, one end of the rod being provided with a block, said block, when the system is in the blocking position, being in contact with the ground.

11. Braking system (**3**) according to Claim 9 or 10, in which the control axis (**9**) is attached to a cam, said cam, when the lever (**12**) is in the closed position, bearing on the rod.

12. Braking system according to one of Claims 6 to 11, comprising a multidirectional castor (**2**).

13. Braking system according to Claim 12, comprising a directional blocking system for the multidirectional castor (**2**).

14. Braking system (**3**) according to one of Claims 6 to 13, comprising a multitude of castors (**2**) associated with a brake, each brake being linked to a control axis (**9**).

15. Bed (**1**) comprising a base (**22**) of substantially rectangular form, defined by edges, and a braking system (**3**) according to one of Claims 6 to 14, in which the reinforcement (**5**) of the actuation system (**4**) is mounted attached to the base (**22**) of the bed (**1**).

16. Bed (**1**) according to Claim 15, in which the bar (**18**) of the actuation system (**4**) is parallel to an edge of the bed (**1**).

17. Bed (**1**) according to Claim 15 or 16, in which the control axes (9) are incorporated in the base (**22**) of the bed (**1**).

18. Bed (**1**) according to one of Claims 15 to 17, in which the lever (**12**) is situated under the base (**22**).

19. Bed (**1**) according to one of Claims 15 to 18, in which the height of the bed (**1**) relative to the ground is adjustable.

20. Bed (**1**) according to Claim 19, comprising a mattress (**25**) and a cross-piece system mounted between the base (**22**) and the mattress (**25**).

21. Bed (**1**) according to Claim 19, comprising a head (**27**), a foot (**28**) of the bed and a column system mounted in the head (**27**) and the foot (**28**) of the bed.

## Patentansprüche

1. System (**4**) zur Fußbetätigung mindestens einer Bremse, wobei das System (**4**) einen eine Betätigungsachse (**6**) definierenden Beschlag (**5**), einen am Beschlag (**5**) angelenkten Hebel (**12**), eine an einer Steuerachse (**9**) befestigte Pleuelstange (**8**) enthält, wobei diese Achse (**9**) lotrecht zur Betätigungsachse (**6**) ist und diese Achse (**9**) die Stellung einer Bremse steuern kann, wobei das System (**4**) **dadurch gekennzeichnet ist, dass** es eine Stange (**18**) enthält, die auf die Pleuelstange (**8**) um eine Achse parallel zur Steuerachse (**9**) schwenkbar montiert ist, um in einer Gleitebene lotrecht zur Steuerachse (**9**) zu gleiten, wobei die Stange (**18**) mit dem ihre Bewegung steuernden Hebel (**12**) verbunden ist, wobei der Hebel (**12**) bezüglich des Beschlags (**5**) in einer Ebene lotrecht zur Betätigungsachse (**6**) beweglich ist.

2. Betätigungssystem (**4**) nach Anspruch 1, bei dem der Hebel (**12**) bezüglich des Beschlags (**5**) um die Betätigungsachse (**6**) zwischen zwei Stellungen schwenkt:
einer offenen Stellung, in der der Hebel (**12**) sich in einer Richtung im Wesentlichen parallel zur Steuerachse (**9**) erstreckt;
einer geschlossenen Stellung, in der der Hebel (**12**) einen Winkel ungleich Null mit der Steuerachse (**9**) bildet.

3. Betätigungssystem (**4**) nach Anspruch 2, bei dem die Stange (**18**) fest mit einer Achse parallel zur Betätigungsachse (**6**) verbunden ist, und bei dem der Hebel (**12**) eine Längsöffnung (**20**) enthält, die sich vom Beschlag (**5**) zu einem Ende des Hebels (**12**) erstreckt, wobei die Achse der Stange (**18**) in die Öffnung (**20**) des Hebels (**12**) so eingefügt ist, dass das Schwenken des Hebels (**12**) das Gleiten der Stange (**18**) bewirkt.

4. Betätigungssystem (**4**) nach einem der Ansprüche 1 bis 3, das eine Vielzahl von Pleuelstangen (**8**) enthält, die je an einer Steuerachse (**9**) einer Bremse befestigt sind, wobei die Achsen (**9**) zueinander parallel und in einer Ebene lotrecht zur Betätigungsachse (**6**) enthalten sind, wobei die Stange (**18**) auf jede Pleuelstange (**8**) schwenkbar montiert ist.

5. Betätigungssystem (**4**) nach einem der Ansprüche 1 bis 4, bei dem der Hebel (**12**) ein Auflageelement (**17**) enthält, das bezüglich des Hebels (**12**) leicht geneigt ist.

6. Bremssystem (**3**) für Rollen, das ein Betätigungssystem (**4**) nach einem der Ansprüche 1 bis 5 und eine einer Bremse zugeordnete Rolle (**2**) enthält, wobei die Drehachse der Rolle (**2**) parallel zur Ebene des Hebels (**12**) ist, wobei die Bremse an der Steuerachse (**9**) zwischen zwei Stellungen angelenkt ist, die vom Betätigungssystem (**4**) abhängen:
einer Freigabestellung, in der die Bremse die Bewegung der Rolle (**2**) frei lässt;
einer Bremsstellung, in der die Bremse der Bewegung der Rolle (**2**) entgegenwirkt.

7. Bremssystem (**3**) nach Anspruch 6, bei dem der Hebel (**12**) zwischen zwei Stellungen beweglich ist:
einer offenen Stellung, in der der Hebel (**12**) sich in einer Richtung im Wesentlichen parallel zur Steuerachse (**9**) erstreckt, und in der die Bremse in der Freigabestellung ist;
einer geschlossenen Stellung, in der der Hebel (**12**) einen Winkel ungleich Null mit der Steuerachse (**9**) bildet, und in der die Bremse in der Bremsstellung ist.

8. Bremssystem (**3**) nach Anspruch 6, bei dem der Hebel (**12**) zwischen zwei Stellungen beweglich ist:
einer offenen Stellung, in der der Hebel (**12**) sich in einer Richtung im Wesentlichen parallel zur Steuerachse (**9**) erstreckt, und in der die Bremse in der Bremsstellung ist;
einer geschlossenen Stellung, in der der Hebel (**12**) einen Winkel ungleich Null mit der Steuerachse (**9**) bildet, und in der die Bremse in der Freigabestellung ist.

9. Bremssystem (**3**) nach einem der Ansprüche 6 bis 8, bei dem die Bremse einen mit der Steuerachse (**9**) verbundenen Stab enthält, wobei ein Ende des Stabs mit einem Gleitstück versehen ist, wobei das Gleitstück, wenn das System in der Blockierstellung ist, mit der Rolle (**2**) in Kontakt ist.

10. Bremssystem (**3**) nach einem der Ansprüche 6 bis 8, bei dem die Bremse einen mit der Steuerachse verbundenen Stab enthält, wobei ein Ende des Stabs mit einem Gleitstück versehen ist, wobei das Gleitstück, wenn das System in der Blockierstellung ist, mit dem Boden in Kontakt ist.

11. Bremssystem (**3**) nach Anspruch 9 oder 10, bei dem die Steuerachse (**9**) fest mit einer Nocke verbunden ist, wobei die Nocke, wenn der Hebel (**12**) in der geschlossenen Stellung ist, auf den Stab drückt.

12. Bremssystem nach einem der Ansprüche 6 bis 11, das eine multidirektionale Rolle (**2**) enthält.

13. Bremssystem nach Anspruch 12, das ein Richtungsblockiersystem der multidirektionalen Rolle (**2**) enthält.

14. Bremssystem (**3**) nach einem der Ansprüche 6 bis 13, das eine Vielzahl von einer Bremse zugeordneten Rollen (**2**) enthält, wobei jede Bremse mit einer Steuerachse (**9**) verbunden ist.

15. Bett (**1**), das einen Unterbau (**22**) von im Wesentlichen Rechteckform, die von Rändern definiert wird, und ein Bremssystem (**3**) nach einem der Ansprüche 6 bis 14 enthält, wobei der Beschlag (**5**) des Betätigungssystems (**4**) fest mit dem Unterbau (**22**) des Betts (**1**) verbunden montiert ist.

16. Bett (**1**) nach Anspruch 15, bei dem die Stange (**18**) des Betätigungssystems (**4**) zu einem Rand des Betts (**1**) parallel ist.

17. Bett (**1**) nach Anspruch 15 oder 16, bei dem die Steuerachsen (**9**) in den Unterbau (**22**) des Betts (**1**) integriert sind.

18. Bett (**1**) nach einem der Ansprüche 15 bis 17, bei dem der Hebel (**12**) sich unter dem Unterbau (**22**) befindet.

19. Bett (**1**) nach einem der Ansprüche 15 bis 18, bei dem die Höhe des Betts (**1**) bezüglich des Bodens einstellbar ist.

20. Bett (**1**) nach Anspruch 19, das einen Bettrahmen (**25**) und ein System mit Kreuzverstrebungen enthält, das zwischen dem Unterbau (**22**) und dem Bettrahmen (**25**) montiert ist.

21. Bett (**1**) nach Anspruch 19, das ein Kopfende (**27**), ein Fußende (**28**) und ein Säulensystem enthält, das in das Kopfende (**27**) und das Fußende (**28**) montiert ist.
